# FASCICULE DE BREVET EUROPEEN

(11) **EP 1 342 405 B1**
(45) Date de publication et mention de la délivrance du brevet: **16.06.2010**
(21) Numéro de dépôt: 03290461.7
(22) Date de dépôt: 27.02.2003
(51) Int. Cl.: A01G 17/06, A01G 17/10

(54) **Dispositif de fixation de fil, notamment de fil de vigne**
Vorrichtung zur Befestigung von Drähten, insbesondere im Weinbau
Device for fixing a wire, in particular a vine wire

(30) Priorité: 08.03.2002 FR 0202924
(43) Date de publication de la demande: 10.09.2003
(73) Titulaire: Gissinger, Jean-Edouard, 08800 Thilay (FR); Thevenin, Patrick, 08150 Bolmont (FR); Thevenin, Stéphane, 51420 Witry Les Reims (FR)
(72) Inventeur: Gissinger, Jean-Edouard, 08800 Thilay (FR); Thevenin, Patrick, 08150 Bolmont (FR); Thevenin, Stéphane, 51420 Witry Les Reims (FR)
(74) Mandataire: Laget, Jean-Loup

(56) Documents cités:
- EP-A- 0 356 263
- FR-A- 2 686 640
- FR-A- 2 762 965
- US-A- 1 454 254
- US-A- 4 982 932
- US-A- 5 438 795
- US-A- 6 050 549

## Description

L'invention est relative à un dispositif de fixation de fil de vigne, notamment de fil de palissage.

L'invention est particulièrement utile pour solidariser des fils fixes ou amovibles à un profilé ou piquet de vigne.

Les vignes sont généralement plantées en rangées parallèles formant des alignements de piquets. Le palissage des vignes s'effectue à l'aide de fils fixes disposés à demeure sur les palissages et de fils amovibles ou fils releveurs permettant de relever la végétation au fur et à mesure de sa croissance, en vue d'optimiser la culture de la vigne.

On connaît de nombreux dispositifs de fixation de fils fixes ou amovibles, par exemple des attaches de fils ou des barrettes pour fils releveurs.

Les documents FR 2 686 640, US 6 050 549, US 4 982 932 et US 1 454 254 décrivent des dispositifs de fixation de fil de clôture ou de fil de fer barbelé, qui ne sont pas utilisables pour la fixation de fil de vigne ou de fil de palissage.

Le document FR 2 762 965 décrit un écarteur pour relevage de vigne, essentiellement constitué en fils métalliques et conformé de manière à définir deux branches écartées, ces deux branches écartées présentant chacune au moins un berceau pour la réception de fils de palissage. Le document FR 2 750 290 décrit une agrafe pour le palissage de la vigne, destinée à une pose mécanisée.

Ces dispositifs connus, fabriqués généralement en fils métalliques cintrés ou en feuillard métallique découpé ou embouti, donnent satisfaction dans les vignobles où le travail de la vigne n'est pas mécanisé : en effet, ces dispositifs qui ont tendance à dépasser notablement de part et d'autre des piquets de vigne sur lesquels ils sont fixés peuvent être percutés par les machines à tailler les vignes ou les machines à vendanger les vignes. Les dispositifs percutés sont alors endommagés, déformés ou pliés, difficilement récupérables et ne peuvent être réutilisés dans la plupart des cas.

L'invention a pour but de remédier aux inconvénients de la technique connue, en proposant un nouveau dispositif dépassant d'une faible distance de part et d'autre des piquets de vigne et évitant les risques de chocs ou d'endommagement par les machines à tailler les vignes ou les machines à vendanger les vignes.

L'invention a pour objet un dispositif de fixation de fil de vigne, notamment de fil de palissage, du type comportant des moyens d'accrochage ou de support de fil, caractérisé en ce que le dispositif présente une conformation déformable, de manière à entourer étroitement le contour d'un profilé ou piquet de vigne et en ce que les moyens d'accrochage ou de support de fil comportent au moins une languette de réception de fil de palissage.

Selon d'autres caractéristiques alternatives de l'invention :
- chaque languette de réception de fil de palissage est une languette rabattable formant crochet élastique de retenue,
- le dispositif présente au moins une partie affaiblie destinée à faciliter la déformation du dispositif,
- au moins une partie affaiblie présente une rangée d'orifices d'affaiblissement,
- au moins un orifice d'une rangée d'orifices d'affaiblissement est un orifice oblong,
- le dispositif peut présenter une conformation en haltère, avec deux parties déformables,
- le dispositif peut comporter plusieurs parties déformables successivement par rapport à une partie centrale, de manière à entourer sensiblement les trois quarts de la circonférence d'un profilé ou piquet de vigne,
- le dispositif peut comporter des pointes, harpons ou organes équivalents destinés à pénétrer dans le corps d'un piquet de vigne, notamment d'un piquet en bois,
- le dispositif est de préférence fabriqué à partir de feuillard, par découpe et mise en forme sur machine automatique.

L'invention sera mieux comprise grâce à la disposition qui va suivre donnée à titre d'exemple non limitatif en référence aux dessins annexés dans lesquels :
- La figure 1 représente schématiquement, une vue en perspective d'un dispositif selon l'invention.
- La figure 2 représente schématiquement, une vue en perspective d'un dispositif selon l'invention assemblé à un piquet de vigne.
- La figure 3 représente schématiquement, une vue en section selon le plan III-III de la figure 2 d'un dispositif selon l'invention assemblé à un piquet de vigne.
- La figure 4 représente schématiquement, une vue en perspective d'un autre dispositif selon l'invention.
- La figure 5 représente schématiquement, une vue en perspective d'un troisième dispositif selon l'invention.
- La figure 6 représente schématiquement, une vue en section illustrant une utilisation du dispositif de la figure 5.
- La figure 7 représente schématiquement, une vue en perspective d'un quatrième dispositif selon l'invention destiné à une fixation sur des piquets de vigne en bois.

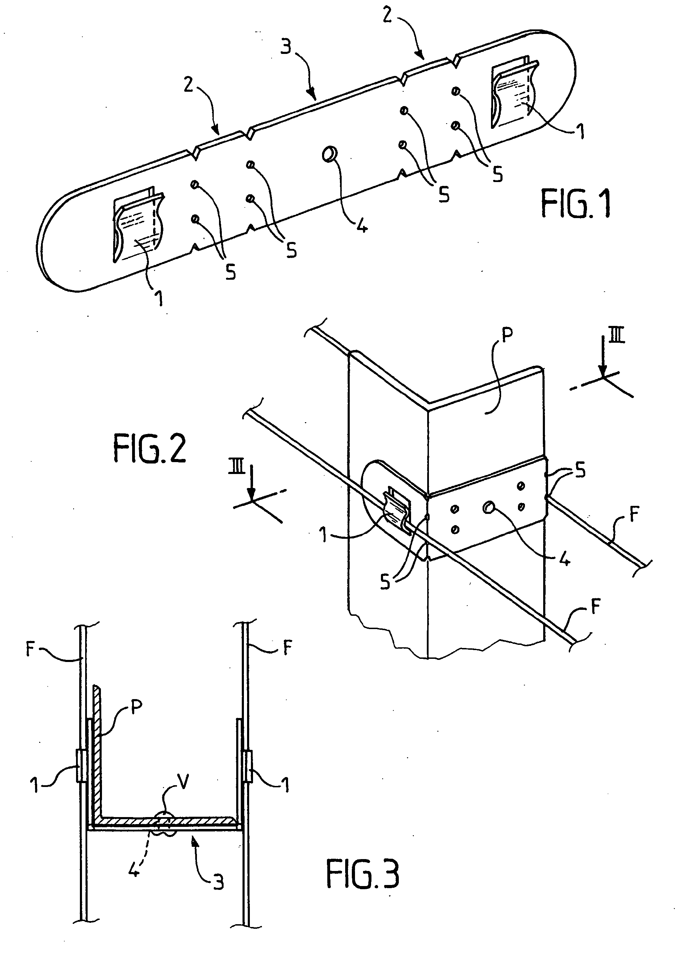

En référence aux figures 1 à 3, un dispositif selon l'invention est réalisé de préférence par découpe sur presse automatique d'un feuillard métallique d'épaisseur comprise entre 0,2 et 3mm. La pièce découpée présente deux extrémités munies chacune d'une languette 1 de réception de fils F de palissage, deux parties intermédiaires 2 et une partie centrale 3 pourvue d'un orifice 4 de fixation à un piquet P de vigne ou profilé.

Chaque languette 1 de réception de fil de palissage présente une conformation formant crochet élastique de retenue.

Les parties intermédiaires 2 comportent chacune au moins une ligne d'orifices 5 destinés à faciliter le pliage des extrémités et permet d'entourer un piquet P (figures 2 et 3), de manière que les languettes 1 portent des fils F de palissage passant au plus près du piquet P sans risque d'endommagement par des machines à tailler les vignes ou des machines à vendanger.

Une vis additionnelle V passant par l'orifice 4 peut être prévue (figure 3) pour solidariser le dispositif selon l'invention au piquet P.

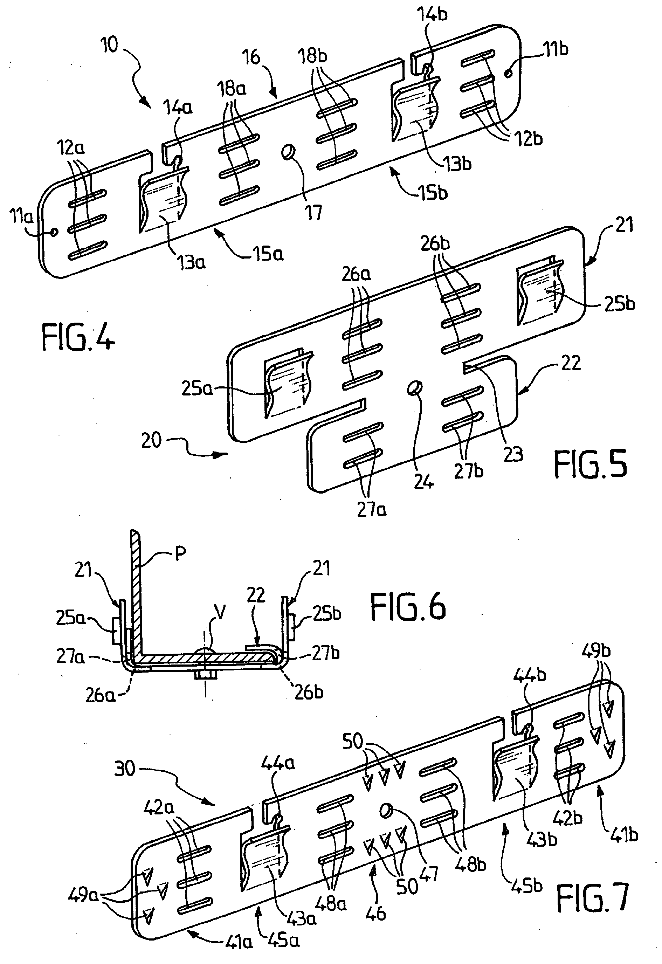

En référence à la figure 4, un autre dispositif 10 selon l'invention présente une conformation allongée avec deux extrémités terminales 11a, 11b destinées à être pliées par rapport au bord du dispositif selon une ligne de pliage passant par les orifices 12a, 12b oblongs d'affaiblissement, ainsi que des organes d'accrochage 13a, 13b de support de fils adjacents à des encoches 14a, 14b d'accrochage de fils.

Les parties 15a, 15b intermédiaires entourent une partie centrale 16 pourvue d'un perçage 17 destiné au passage d'une vis éventuelle. Chaque partie intermédiaire 15a ou 15b est limitée d'un côté par les orifices oblongs 12a ou 12b et du côté opposé par d'autres orifices oblongs 18 a ou 18b.

Cette disposition permet tout d'abord de replier les parties 15a et 15b par rapport à la partie centrale 16, puis de replier les parties distales 11a, 11b par rapport aux parties intermédiaires 15a et 15b, de manière à déformer le dispositif selon l'invention selon une conformation entourant sensiblement les trois quarts du profilé ou piquet de vigne auquel le dispositif est destiné.

En référence à la figure 5, un autre dispositif 20 selon l'invention présente une conformation en haltère à deux têtes inégales.

Ce dispositif 20 présente une partie supérieure 21 et une partie inférieure 22 reliées entre elles par un col 23 pourvu d'un orifice 24 pour le passage d'une vis, un rivet, boulon, clou, ou autre engin mécanique de fixation.

La partie supérieure 21 du dispositif comporte deux languettes ou crochets élastiques rabattables 25a, 25b d'accrochage situées sur les parties distales rabattables face aux orifices oblongs 26a, 26b d'affaiblissement.

La partie inférieure 22 comporte des ailes rabattables autour des lignes d'affaiblissement constituées par les orifices 27a, 27b d'affaiblissement. Cette disposition est avantageuse pour fixer le dispositif selon l'invention sur un profilé ou un piquet de vigne présentant une section en T.

Sur la figure 6, on voit que ce dispositif 20 peut également être utilisé pour être fixé sur un profilé P en cornière, à condition d'entourer uniquement partiellement une aile de la cornière, et en utilisant l'autre extrémité de la partie inférieure 22 comme moyen de positionnement à l'angle de la cornière.

Il est avantageux dans ce cas d'utiliser une vis de fixation V passant par l'orifice 24.

En référence à la figure 7, un quatrième mode de réalisation de dispositif selon l'invention comporte des éléments identiques ou fonctionnellement équivalents aux éléments du dispositif de la figure 4.

Ce dispositif 30 comporte des extrémités terminales 41a, 41b, des orifices oblongs 42a, 42b, des languettes 43a, 43b de maintien de fils, des encoches 44a, 44b d'accrochage de fils, des parties intermédiaires 45a, 45b, une partie centrale 46 percée d'un trou 47 pour un organe éventuel de fixation mécanique et des orifices 48a, 48b d'affaiblissement facilitant le pliage du dispositif 40.

Le dispositif 40 est destiné en particulier à une fixation rapide sur des piquets en bois ou matériau équivalent.

A cet effet, le dispositif 40 comporte des pointes terminales 49a, 49b réalisées par creusé triangulaire et pliage, ainsi que des pointes 50 en partie centrale réalisées également par creusé triangulaire et pliage. Ces pointes triangulaires 49a, 49b et 50 sont destinées à être enfoncées dans un piquet non représenté en bois ou matériau analogue, de manière à maintenir ou clouer le dispositif 40 sur le piquet.

Dans le cas où le dispositif 40 entoure plus des trois quarts de la circonférence du piquet en bois, il est inutile de prévoir une vis ou un clou complémentaire passant par l'orifice 47 pour maintenir le dispositif par rapport au piquet en bois non représenté.

Un point commun à tous les dispositifs selon l'invention est que chaque dispositif est réalisable de manière économique et rapide à partir de feuillards découpés et mis ensemble sur machine automatique.

L'invention décrite en référence à plusieurs modes de réalisation particuliers n'y est nullement limitée, mais couvre au contraire toute modification de forme et toute variante de réalisation dans le cadre et l'esprit de l'invention.

## Revendications

1. Dispositif de fixation de fil, du type comportant des moyens (1) d'accrochage ou de support de fil, le dispositif présentant une conformation déformable, de manière à entourer étroitement le contour d'un profilé ou piquet, **caractérisé en ce que** le dispositif est un dispositif de fixation de fil de vigne, notamment de fil de palissage, et **en ce que** les moyens d'accrochage ou de support de fil (F) comportent au moins une languette (1) de réception de fil (F) de palissage présentant une conformation formant crochet élastique de retenue.

2. Dispositif selon la revendication 1, **caractérisé en ce que** chaque languette (1) de réception de fil (F) de palissage est une languette (1) rabattable formant crochet élastique (25a, 25b) de retenue.

3. Dispositif selon la revendication 2, **caractérisé en ce que** le dispositif présente au moins une partie affaiblie (5, 12a, 12b, 18a, 18b, 26a, 26b, 27a, 27b, 42a, 42b, 48a, 48b) destinée à faciliter la déformation du dispositif.

4. Dispositif selon la revendication 3, **caractérisé en ce qu'**au moins une partie affaiblie présente une rangée (5, 12a, 12b, 18a, 18b, 26a, 26b, 27a, 27b, 42a, 42b, 48a, 48b) d'orifices d'affaiblissement.

5. Dispositif selon la revendication 3 ou la revendication 4, **caractérisé en ce qu'**au moins un orifice d'une rangée (5, 12a, 12b, 18a, 18b, 26a, 26b, 27a, 27b, 42a, 42b, 48a, 48b) est un orifice oblong.

6. Dispositif selon l'une quelconque des revendications précédentes, **caractérisé en ce que** le dispositif présente une conformation en haltère, avec deux parties (21, 22) déformables.

7. Dispositif selon l'une quelconque des revendications 1 à 6, **caractérisé en ce que** le dispositif comporte plusieurs parties (11a, 11b, 15a, 15b) déformables successivement par rapport à une partie centrale (16), de manière à entourer sensiblement les trois quarts de la circonférence d'un profilé (P) ou piquet de vigne.

8. Dispositif selon la revendication 7, **caractérisé en ce que** le dispositif comporte des pointes (49a, 49b, 50), harpons ou organes équivalents destinés à pénétrer dans le corps d'un piquet (P) de vigne, notamment d'un piquet en bois.

9. Dispositif selon l'une quelconque des revendications précédentes, **caractérisé en ce que** le dispositif est fabriqué à partir de feuillard par découpe et mise en forme sur machine automatique.

## Claims

1. A device for fastening wire, of the kind comprising wire hooking or supporting means (1), the device having a deformable shape, so as to tightly surround the outline of a profile or stake, **characterized in that** the device is a device for fastening vineyard wire, especially tying-up wire, and that the wire (F) hooking or supporting means comprise at least one tab (1) for receiving tying-up wire (F) having a shape forming an elastic retaining hook.

2. The device according to claim 1, **characterized in that** each tab (1) for receiving tying-up wire (F) is a foldable tab (1) forming an elastic retaining hook (25a, 25b).

3. The device according to claim 2, **characterized in that** the device has at least one weakened part (5, 12a, 12b, 18a, 18b, 26a, 26b, 27a, 27b, 42a, 42b, 48a, 48b) designed to facilitate deformation of the device.

4. The device according to claim 3, **characterized in that** at least one weakened part has a row (5, 12a, 12b, 18a, 18b, 26a, 26b, 27a, 27b, 42a, 42b, 48a, 48b) of weakening orifices.

5. The device according to claim 3 or claim 4, **characterized in that** at least one orifice of a row (5, 12a, 12b, 18a, 18b, 26a, 26b, 27a, 27b, 42a, 42b, 48a, 48b) is an elongated orifice.

6. The device according to any of the preceding claims, **characterized in that** the device has a dumbbell-shape with two deformable parts (21, 22).

7. The device according to any of claims 1 to 6, **characterized in that** the device comprises several parts (11 a, 11 b, 15a, 15b) successively deformable with respect to a center part (16), so as to substantially surround three quarters of the circumference of a profile (P) or vineyard stake.

8. The device according to claim 7, **characterized in that** the device comprises points (49a, 49b, 50), catch hooks, or equivalent members designed to penetrate into the body of a vineyard stake (P), especially a wooden stake.

9. The device according to any of the preceding claims, **characterized in that** the device is made from hoop iron by cutting and shaping on automated machinery.

## Patentansprüche

1. Vorrichtung zum Befestigung von Draht, von der Art, die Mittel (1) zum Aufhängen oder Tragen von Draht umfasst, wobei die Vorrichtung eine verformbare Gestalt aufweist, um den Umriss eines Profils oder Pfahls eng zu umgeben, **dadurch gekennzeichnet, dass** die Vorrichtung eine Vorrichtung zum Befestigen von Weinbergdraht, insbesondere von Heftdraht, ist, und dass die Mittel zum Aufhängen oder Tragen von Draht (F) mindestens eine Lasche (1) zum Aufnehmen des Heftdrahts (F) umfassen, die eine Gestalt aufweist, die einen elastischen Haltehaken bildet.

2. Vorrichtung nach Anspruch 1, **dadurch gekennzeichnet, dass** jede Lasche (1) zum Aufnehmen von Heftdraht (F) eine umlegbare Lasche (1) ist, die einen elastischen Haltehaken (25a, 25b) bildet.

3. Vorrichtung nach Anspruch 2, **dadurch gekennzeichnet, dass** die Vorrichtung mindestens einen abgeschwächten Teil (5, 12a, 12b, 18a, 18b, 26a, 26b, 27a, 27b, 42a, 42b, 48a, 48b) umfasst, der dazu gedacht ist, die Verformung der Vorrichtung zu erleichtern.

4. Vorrichtung nach Anspruch 3, **dadurch gekennzeichnet, dass** mindestens ein abgeschwächter Teil eine Reihe (5, 12a, 12b, 18a, 18b, 26a, 26b, 27a, 27b, 42a, 42b, 48a, 48b) von Abschwächungsöffnungen aufweist.

5. Vorrichtung nach Anspruch 3 oder 4, **dadurch gekennzeichnet, dass** mindestens eine Öffnung einer Reihe (5, 12a, 12b, 18a, 18b, 26a, 26b, 27a, 27b, 42a, 42b, 48a, 48b) eine längliche Öffnung ist.

6. Vorrichtung nach einem der vorhergehenden Ansprüche, **dadurch gekennzeichnet, dass** die Vorrichtung hantelförmige Gestalt mit zwei vorformbaren Teilen (21, 22) aufweist.

7. Vorrichtung nach einem der Ansprüche 1 bis 6, **dadurch gekennzeichnet, dass** die Vorrichtung mehrere Teile (11a, 11b, 15a, 15b) umfasst, die im Verhältnis zu einem mittleren Teil (16) nacheinander verformbar sind, um im Wesentlichen Dreiviertel des Umfangs eines Profils (P) oder Weinbergpfahls zu umgeben.

8. Vorrichtung nach Anspruch 7, **dadurch gekennzeichnet, dass** die Vorrichtung Spitzen (49a, 49b, 50), Fanghaken oder gleichwertige Organe umfasst, die dazu gedacht sind, in den Körper eines Weinbergpfahls (P), insbesondere eines Holzpfahls, einzudringen.

9. Vorrichtung nach einem der vorhergehenden Ansprüche, **dadurch gekennzeichnet, dass** die Vorrichtung aus Bandeisen durch Schneiden und Formgeben auf einer automatischen Maschine hergestellt wird.
